# EUROPEAN PATENT SPECIFICATION

(11) **EP 3 339 014 B1**
(45) Date of publication and mention of the grant of the patent: **10.07.2019**
(21) Application number: 17207114.4
(22) Date of filing: 13.12.2017
(51) Int. Cl.: B32B 3/20, B32B 3/30, B32B 3/26, B32B 5/02, B32B 7/14, B32B 27/32, B32B 27/36, B32B 27/12, A41D 31/02

(54) **BREATHABLE AND WATERPROOF COMPOSITE FABRIC**
ATMUNGSAKTIVES UND WASSERDICHTES VERBUNDGEWEBE
TISSU COMPOSITE RESPIRANT ET IMPERMÉABLE À L'EAU

(30) Priority: 22.12.2016 TW 105142605
(43) Date of publication of application: 27.06.2018
(73) Proprietor: Huang, Chen-Cheng, Taipey City 10595 (TW); Huang, Pao-Han, Taipei City 10595 (TW); Huang, Pao-Hao, Taipei City 10595 (TW)
(72) Inventor: Huang, Chen-Cheng, Taipey City 10595 (TW); Huang, Pao-Han, Taipei City 10595 (TW); Huang, Pao-Hao, Taipei City 10595 (TW)
(74) Representative: HGF Limited

(56) References cited:
- EP-A1- 2 932 949
- CN-A- 1 943 530
- US-A1- 2014 363 625
- US-A1- 2016 257 091

## Description

This invention relates to a breathable and waterproof composite fabric, more particularly to a breathable and waterproof composite fabric including a fabric sheet and a plastic film having hollow protrusions.

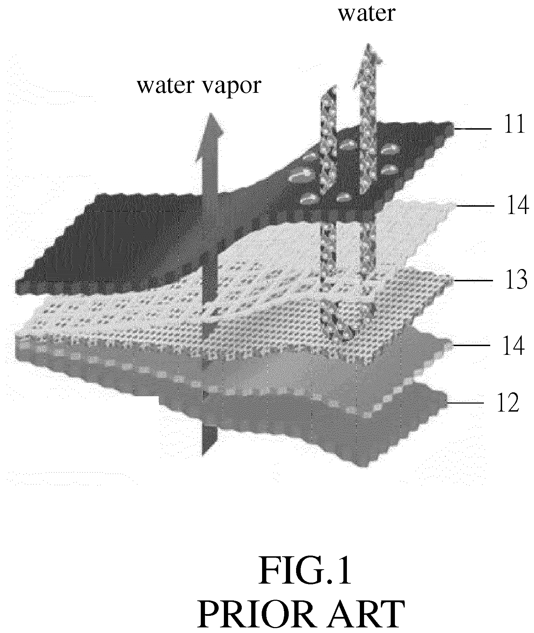

Fig. 1 illustrates a Gore-tex® breathable and waterproof fabric for outdoor clothing. The Gore-tex® breathable and waterproof fabric includes an outer shell 11, an inner liner 12, and a triply structure interposed between the outer shell 11 and the inner liner 12. The triply structure includes a breathable and waterproof sponge-like porous membrane 13 sandwiched between two protection layers 14. The porous membrane 13 is made from a polymer, such as Teflon®, polyvinylidene fluoride (PVDF), or polyurethane, and is formed with pores in a known manner, such as that disclosed in U.S. Patent Nos. 3,953,566 and 4,187,390. The pores formed in the porous membrane 13 have a pore size in the order of less than one micron in order to permit transpiration of water vapor and to prevent water from permeating therethrough. The porous membrane 13 has a thickness ranging from 50 microns to several hundreds of microns.

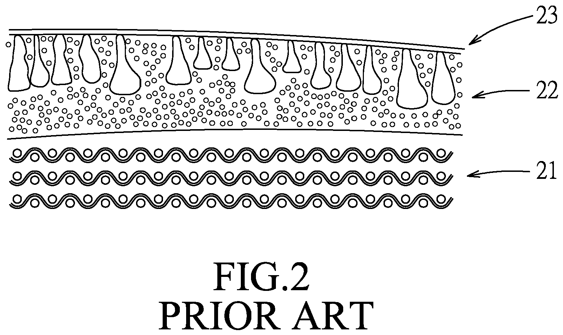

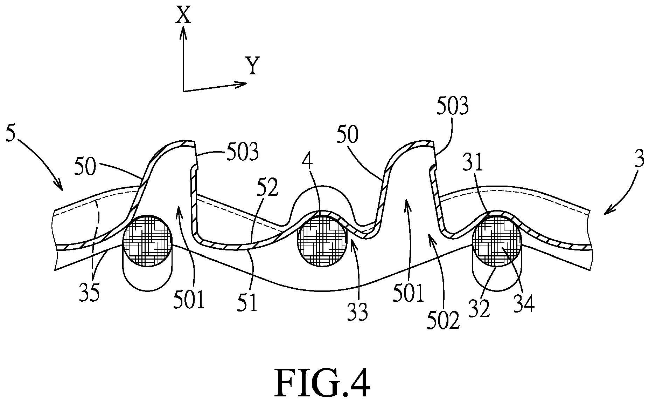

Referring to Fig. 2, U.S. Patent Application Publication No.2004/0256310 discloses a method of making a highly breathable and waterproof fabric including a multilayered fabric sheet 21, a breathable and waterproof sponge-like porous membrane 22 (with a trademark NanoTex®) formed on the fabric sheet 21, and a hydrophilic layer 23 formed on the porous membrane 22. The method involves the steps of providing a solution of PVDF in a solvent, coating the solution on the fabric sheet 21 to form a film of the solution, and bringing a liquid material into contact with the film so as to leach the solvent from the solution of PVDF and to cause gelation of PVDF so as to form the porous membrane 22 on the fabric sheet 21. The porous membrane 22 has a pore size ranging from 100 nm to 10 µm, preferably ranging from 100 nm to 1000 nm so as to obtain satisfactory waterproofness and breathability. In one example, the porous membrane 22 has a maximum pore size of about 0.3 µm in order to be waterproof under a 60 mph raindrop velocity. Moreover, the porous membrane 22 has a breathability ranging from 4000 to 10000 g/m²/day. It is noted that Fig. 4 of the specification of U.S. Patent Application Publication No.2004/0256310 shows a comparison between a structure of the porous membrane 22 (NanoTex®) and a structure of the porous membrane 13 (Gore-tex®) of Fig. 1. Both of the structures show irregular and randomly distributed pores.

The costs of making the aforesaid porous membranes 13, 22 are high.

US2014/0363625 discloses a breathable and waterproof composite fabric.

Therefore, an object of the disclosure is to provide a breathable and waterproof composite fabric that can alleviate at least one of the drawbacks of the prior art.

The breathable and waterproof composite fabric includes a fabric sheet and a first waterproof plastic film.

The fabric sheet has a first surface, a second surface that is opposite to the first surface, and a plurality of micropores that extend through the first and second surfaces.

The first waterproof plastic film is made of a non-porous material and has an outer surface, an inner surface that is opposite to the outer surface and that is bonded to the first surface of the fabric sheet, and a plurality of first hollow protrusions that protrude from the outer surface. Each of the first hollow protrusions defines a first channel that extends through the inner and outer surfaces and that has a first inner open end at the inner surface, and a first outer open end distal from the inner and outer surfaces. The first channel of each of the first hollow protrusions extends curvedly from the first inner open end to the first outer open end.

Other features and advantages of the disclosure will become apparent in the following detailed description of the embodiment with reference to the accompanying drawings, of which:
FIG. 1 is an exploded perspective view of a conventional breathable and waterproof fabric;
FIG. 2 is a schematic view of another conventional breathable and waterproof fabric;
FIG. 3 is a fragmentary exploded perspective view of an embodiment of a breathable and waterproof composite fabric according to the disclosure;
FIG. 4 is a fragmentary cross-sectional view of the embodiment;
FIG. 5 is a process flow chart of a method of making the embodiment of the breathable and waterproof composite fabric according to the disclosure;
FIG. 6 is a fragmentary cross-sectional view of another configuration of the embodiment of the breathable and waterproof composite fabric according to the disclosure;
FIG. 7 is a fragmentary exploded perspective view of yet another configuration of the embodiment of the breathable and waterproof composite fabric according to the disclosure;
FIG. 8 is a fragmentary cross-sectional view of the configuration of FIG. 7;
FIG. 9 is a fragmentary exploded perspective view of still another configuration of the embodiment of the breathable and waterproof composite fabric according to the disclosure;
FIG. 10 is a fragmentary cross-sectional view of the configuration of FIG. 9;
FIG. 11 is a process flow chart of a method of making the configuration of FIG. 9; and
FIG. 12 is a fragmentary cross-sectional view of still yet another configuration of the embodiment of the breathable and waterproof composite fabric according to the disclosure.

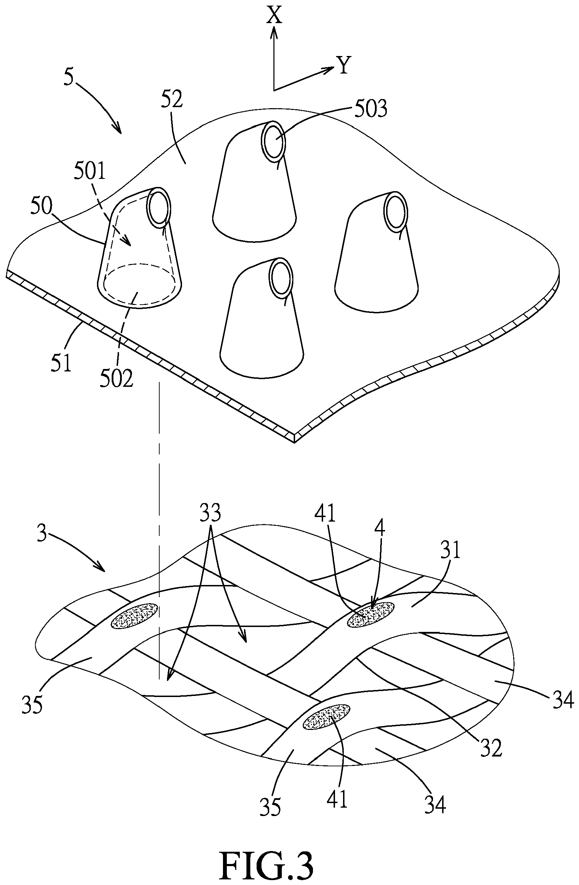

Referring to FIGS. 3 and 4, the embodiment of the breathable and waterproof composite fabric according to the disclosure includes a fabric sheet 3 and a first waterproof plastic film 5.

The fabric sheet 3 has a first surface 31, a second surface 32 that is opposite to the first surface 31, and a plurality of micropores 33 that extend through the first surface 31 and the second surface 32.

The first waterproof plastic film 5 is made of a non-porous material and has an outer surface 52, an inner surface 51 that is opposite to the outer surface 52 and that is bonded to the first surface 31 of the fabric sheet 3, and a plurality of first hollow protrusions 50 that protrude from the outer surface 52 in a first direction (X) opposite to the fabric sheet 3. Each of the first hollow protrusions 50 defines a first channel 501 that extends through the inner surface 51 and the outer surface 52 and that has a first inner open end 502 at the inner surface 51, and a first outer open end 503 distal from the inner surface 51 and the outer surface 52. The first channels 501 allow water vapor to transpire and prevent water from permeating therethrough.

The first channel 501 of each of the first hollow protrusions 50 extends curvedly from the first inner open end 502 to the first outer open end 503. In one form, the first hollow protrusions 50 are curved to extend in a second direction (Y) transverse to the first direction (X).

The breathable and waterproof composite fabric may further include an adhesive pattern layer 4 disposed between and interconnecting the first surface 31 of the fabric sheet 3 and the inner surface 51 of the first waterproof plastic film 5. The fabric sheet 3 may be made of a woven material or a non-woven material. In one form, the fabric sheet 3 includes a plurality of warps 34 and wefts 35 that interlace with one another to form the micropores 33. For instance, the warps 34 and the wefts 35 of the fabric sheet 3 are formed using knitting techniques.

In one form, the fabric sheet 3 may have a layered structure.

The adhesive pattern layer 4 may have a dot shape or a strip shape and uncover the micropores 33, so that the breathability of the fabric sheet 3 can be maintained. Material for forming the adhesive pattern layer 4 is commercially available. In the embodiment, the adhesive pattern layer 4 includes a plurality of adhesive dots 41.

In one form, the first channel 501 of each of the first hollow protrusions 50 has a funnel shape that is tapered from the inner open end 502 to the outer open end 503. Specifically, the first channel 501 of each of the first hollow protrusions 50 has a minimum diameter that is greater than 0.2 µm and smaller than 10 µm. More specifically, the minimum diameter of the first channel 501 of each of the first hollow protrusions 50 may be greater than 0.5 µm and smaller than 5 µm.

In one form, each of the micropores 33 of the fabric sheet 3 has a diameter that ranges from 20 µm to 200 µm.

The first waterproof plastic film 5 may be made from a thermoplastic material selected from the group consisting of polyolefins, polyesters, thermoplastic elastomers and combinations thereof. The first waterproof plastic film 5 may have a thickness that is measured from the inner surface 51 to the outer surface 52 and that ranges from 10 µm to 70 µm.

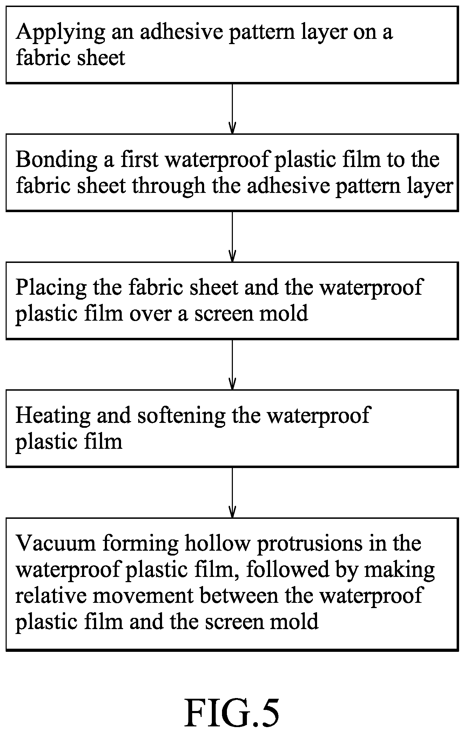

Further referring to FIG. 5, the embodiment of the breathable and waterproof composite fabric is formed by the following steps: applying the adhesive pattern layer 4 on the fabric sheet 3 in such a manner that the adhesive pattern layer 4 uncovers the micropores 33 in the fabric sheet 3; bonding the inner surface 51 of the first waterproof plastic film 5 to the first surface 31 of the fabric sheet 3 through the adhesive pattern layer 4; placing the fabric sheet 3 and the first waterproof plastic film 5 over a screen mold (not shown); heating and softening the first waterproof plastic film 5; vacuum-forming the first hollow protrusions 50 in the first waterproof plastic film 5 by applying a first suction force to the screen mold along the first direction (X) that is transverse to the fabric sheet 3, followed by making relative movement between the first waterproof plastic film 5 and the screen mold along the second direction (Y) that is transverse to the first direction (X) so as to dislocate the first waterproof plastic film 5 relative to the screen mold, thereby causing the first channel 501 to change from the first direction (X) to the second direction (Y) to form the composite fabric; cooling the composite fabric; and separating the composite fabric from the screen mold. In the embodiment, the vacuum-forming step is conducted using vacuum suction techniques.

The aforesaid method is advantageous in that the minimum diameter of each of the first channels 501 of the first waterproof plastic film 5 is easily controlled by adjusting the thickness of the first waterproof plastic film 5. A height of each of the hollow protrusions 50 may be adjustable by adjusting a mesh size of the screen mold, and a density of the first hollow protrusions 50 of the first waterproof plastic film 5 may be adjustable by adjusting the quantity of the meshes of the screen mold. The higher the density of the first hollow protrusions 50 is, the greater the breathability of the first waterproof plastic film 5 is. In one form, the first waterproof plastic film 5 may further include a plurality of additional blind ended protrusions (not shown) protruding from the outer surface 52 in the first direction (X). Each of the additional protrusions defines a blind channel that has an outer closing end distal from the inner surface 51 and the outer surface 52, so that the waterproofness of the composite fabric can be controlled by the additional protrusions.

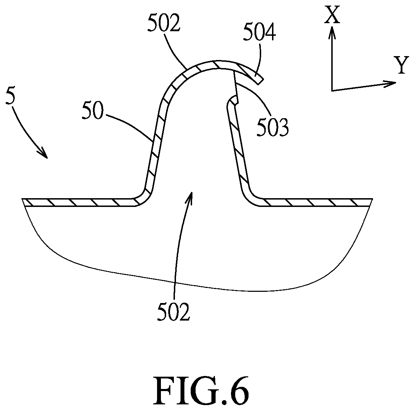

Referring to FIG. 6, in another configuration of the embodiment of the breathable and waterproof composite fabric, each of the first hollow protrusions 50 further includes an extending tab 504 that extends from the outer open end 503 and that is movable to cover or uncover the outer open end 503.

When water droplets fall on the breathable first waterproof plastic film 5, the extending tabs 504 bear the weight of the water droplets and are forced to cover the outer open end 503 of the first hollow protrusions 50.

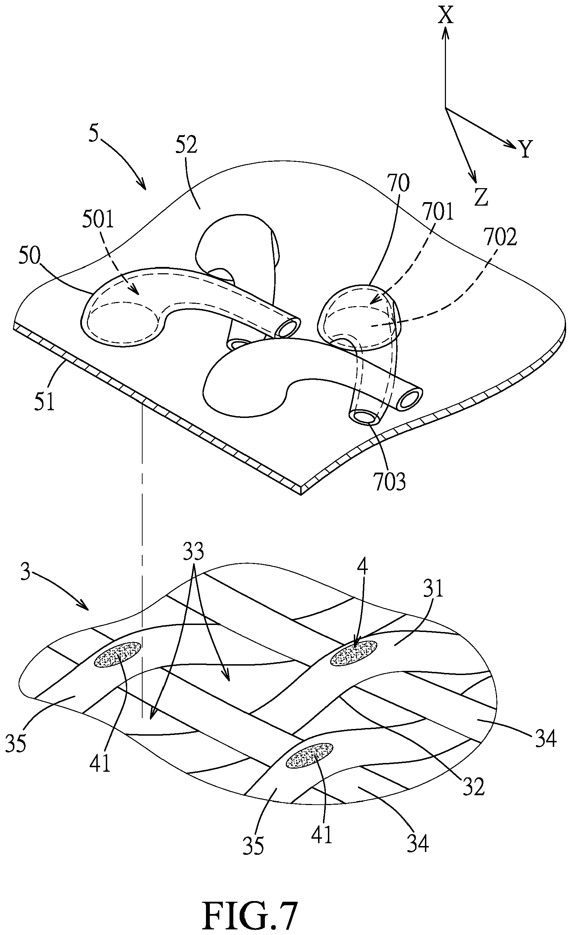

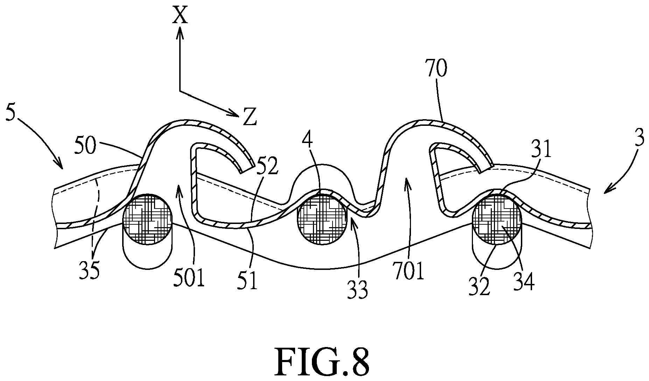

Referring to FIGS. 7 and 8, in yet another configuration of the embodiment of the breathable and waterproof composite fabric, the first waterproof plastic film 5 further includes a plurality of second hollow protrusions 70 that protrude from the outer surface 52 in the first direction (X) opposite to the fabric sheet 3 and that are curved to extend in a third direction (Z) that is transverse to the first direction (x) and different from the second direction (Y).

Each of the second hollow protrusions 70 defines a second channel 701 that extends through the inner and outer surfaces 51, 52 and that has a second inner open end 702 formed at the inner surface 51, and a second outer open end 703 distal from the inner and outer surfaces 51, 52. The second channel 701 extends curvedly from the second inner open end 702 to the second outer open end 703.

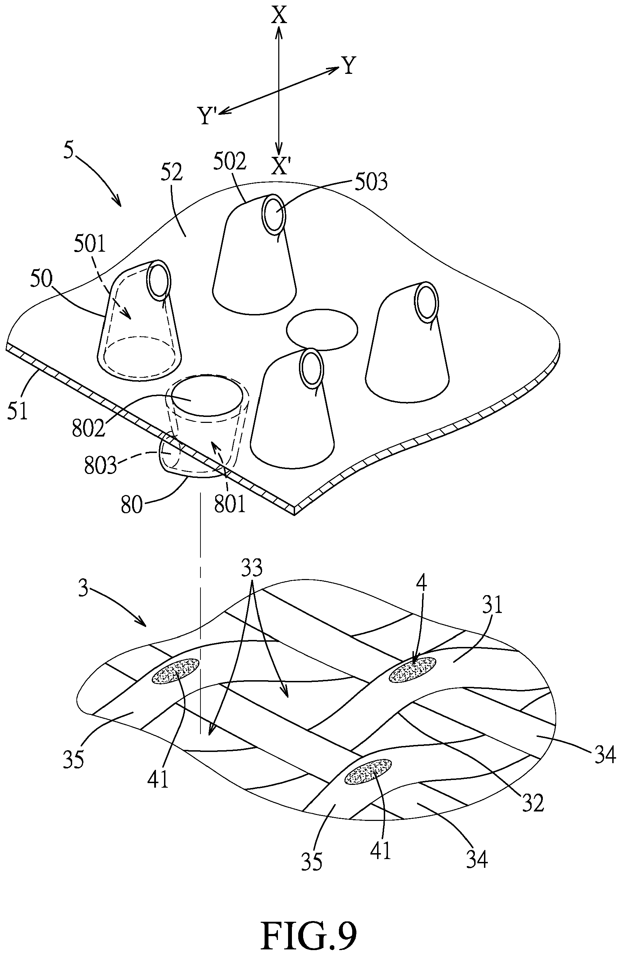

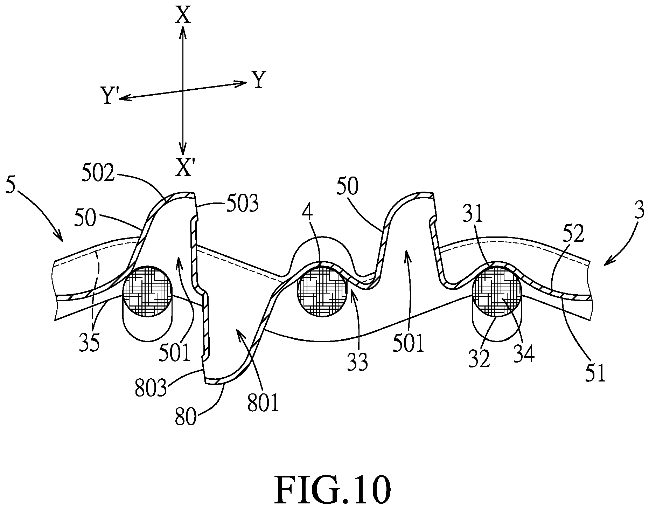

Referring to FIGS. 9 and 10, in still another configuration of the embodiment of the breathable and waterproof composite fabric, the first waterproof plastic film 5 further includes a plurality of third hollow protrusions 80 protruding from the inner surface 51 in a fourth direction (X') that is opposite to the first direction (X) and curved to extend in a fifth direction (Y') transverse to the fourth direction (X').

Each of the third hollow protrusions 80 defines a third channel 801 that extends through the inner and outer surfaces 51, 52 and that has a third inner open end 802 formed at the outer surface 52, and a third outer open end 803 distal from the inner and outer surfaces 51, 52. The third channel 801 extends curvedly from the third inner open end 802 to the third outer open end 803.

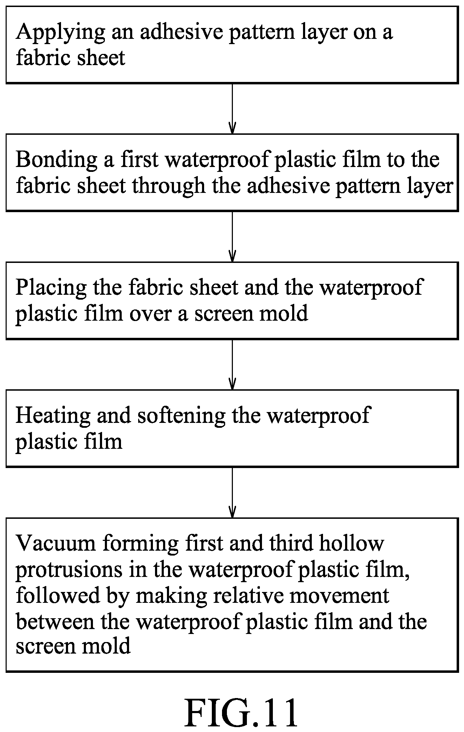

Further referring to FIG. 11, the breathable and waterproof composite fabric of FIGS. 8 and 9 are manufactured by a process similar to that of FIG. 5 and before cooling the composite fabric, the step of forming the third hollow protrusions 80 is further included. Specifically, the third hollow protrusions are manufactured by vacuum-forming the third hollow protrusions 80 of the first waterproof plastic film 5 by applying a second suction force to the screen mold along the fourth direction (X') using the vacuum suction techniques, followed by making relative movement between the first waterproof plastic film 5 and the screen mold along the fifth direction (Y') so as to dislocate the first waterproof plastic film 5 relative to the screen mold. In this configuration of the embodiment, the vacuum-forming step of forming the third hollow protrusions 80 is conducted using vacuum suction techniques.

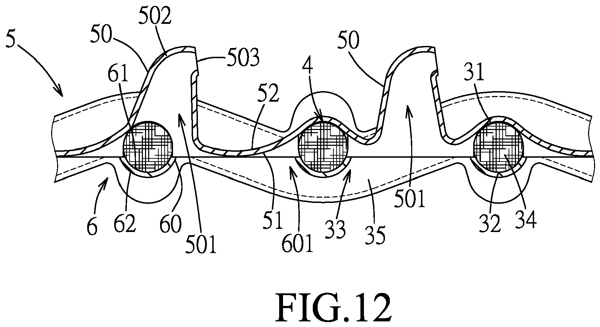

Referring to FIG. 12, in a still yet another configuration of the embodiment of the breathable and waterproof composite fabric, the breathable and waterproof composite fabric further includes a second waterproof plastic film 6 that is made of a non-porous material. The second waterproof plastic film 6 includes an outer surface 62, an inner surface 61 that is opposite to the outer surface 62 and that is bonded to the second surface 32 of the fabric sheet 3, and a plurality of fourth hollow protrusions 60 protruding from the outer surface 62 of the second waterproof plastic film 6.

Each of the fourth hollow protrusions 60 defines a fourth channel 601 that extends through the inner and outer surfaces 61, 62 of the second plastic film 6, so that water vapor can pass through the fourth channels 601.

When the second waterproof plastic film 6 is intended to be formed, the second waterproof plastic film 6 is melt-bonded to the second surface 32 of the fabric sheet 3 prior to forming of the adhesive pattern layer 4 and the first waterproof plastic film 5 on the fabric sheet 3, followed by heating and softening of the second waterproof plastic film 6, after which the fourth hollow protrusions 60 are formed using the vacuum suction techniques to form the second waterproof plastic film 6. Therefore, the inner surface 61 of the second waterproof plastic film 6 corresponds in pattern to the embossed texture of the second surface 32 of the fabric sheet 3. Thereafter, the steps for forming the breathable and waterproof composite fabric illustrated in FIGS. 3 to 5 are performed.

In one form, the fourth hollow protrusions 60 may extend in the fourth direction (X') that is opposite to the first direction (X), such that the fourth hollow protrusions 60 do not extend into the micropores 33 of the fabric sheet 3.

The second waterproof plastic film 6 may be made from a thermoplastic material selected from the group consisting of polyolefins, polyesters, and thermoplastic elastomers.

By virtue of the design of the first and fourth channels 501, 601, the waterproofness and breathability of the first and second waterproof plastic films 5, 6 can be improved, and the aforesaid drawback associated with the prior art may be alleviated.

In the description above, for the purpose of explanation, numerous specific details have been set forth in order to provide a thorough understanding of the embodiment. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects.

## Claims

1. A breathable and waterproof composite fabric including a fabric sheet (3) having a first surface (31) and a second surface (32) that is opposite to the first surface (31), and a plurality of micropores (33) extending through the first and second surfaces (31, 32), and a first waterproof plastic film (5) having an outer surface (52), an inner surface (51) that is opposite to the outer surface (52), and a plurality of first hollow protrusions (50), the breathable and waterproof composite fabric being **characterized by**:
the first waterproof plastic film (5) made of a non-porous material and bonded to said first surface (31) of said fabric sheet (3), the first hollow protrusions (50) of the first waterproof plastic film (5) protruding from the outer surface (52), each of the first hollow protrusions (50) defining a first channel (501) that extends through the inner and outer surfaces (51, 52) and that has a first inner open end (502) formed at the inner surface (51), and a first outer open end (503) distal from the inner and outer surfaces (51, 52), said first channel (501) extending curvedly from said first inner open end (502) to said first outer open end (503).

2. The breathable and waterproof composite fabric in claim 1, **characterized in that** the first hollow protrusions (50) protrude from the outer surface (52) in a first direction (X) opposite to the fabric sheet (3) and are curved to extend in a second direction (Y) transverse to the first direction.

3. The breathable and waterproof composite fabric in claim 1 or 2, further **characterized by** an adhesive pattern layer (4) disposed between and interconnecting the first surface (31) of the fabric sheet (3) and the inner surface (51) of the first waterproof plastic film (5).

4. The breathable and waterproof composite fabric in claim 3, **characterized in that** said adhesive pattern layer (4) includes a plurality of adhesive dots (41).

5. The breathable and waterproof composite fabric in any one of claims 1 to 4, **characterized in that** said first channel (501) of each of the first hollow protrusions (50) has a funnel shape tapered from said first inner open end (502) to said first outer open end (503).

6. The breathable and waterproof composite fabric in any one of claims 1 to 5, **characterized in that** each of the first hollow protrusions (50) further includes an extending tab (504) that extends from said first outer open end (503) and that is movable to cover or uncover said first outer open end (503).

7. The breathable and waterproof composite fabric in any one of claims 2 to 6, **characterized in that** the first waterproof plastic film further has a plurality of second hollow protrusions (70) that protrude from the outer surface (52) in the first direction (X) opposite to the fabric sheet (3) and that are curved to extend in a third direction (Z) transverse to the first direction (x) and different from the second direction (Y).

8. The breathable and waterproof composite fabric in any one of claims 1 to 7, **characterized in that** said first channel (501) of each of the first hollow protrusions (50) has a minimum diameter that is greater than 0.2 µm and smaller than 10 µm.

9. The breathable and waterproof composite fabric in any one of claims 1 to 8, **characterized in that** said first channel (501) of each of the first hollow protrusions (50) has a minimum diameter that is greater than 0.5 µm and smaller than 5 µm.

10. The breathable and waterproof composite fabric in any one of claims 1 to 9, **characterized in that** the first waterproof plastic film (5) is made from a thermoplastic material selected from the group consisting of polyolefins, polyesters, thermoplastic elastomers and combinations thereof.

11. The breathable and waterproof composite fabric in any one of claims 2 to 10, **characterized in that** the first waterproof plastic film (3) further includes a plurality of third hollow protrusions (80) that protrude from the inner surface (51) in a fourth direction (X') opposite to the first direction (X), and that are curved to extend in a fifth direction (Y') transverse to the fourth direction (X').

12. The breathable and waterproof composite fabric in any one of claims 1 to 11, further **characterized by** a second waterproof plastic film (6) made of a non-porous material, including an outer surface (62), an inner surface (61) that is opposite to said outer surface (62) of said second waterproof plastic film (6) and that is bonded to the second surface (32) of the fabric sheet (3), and a plurality of fourth hollow protrusions (60) protruding from said outer surface (62) of said second waterproof plastic film (6).

13. The breathable and waterproof composite fabric of claim 12, **characterized in that** said second waterproof plastic film (6) is made from a thermoplastic material selected from the group consisting of polyolefins, polyesters and thermoplastic elastomers.

14. The breathable and waterproof composite fabric in any one of claims 1 to 13, **characterized in that** the first waterproof plastic film (5) has a thickness that is measured from the inner surface (51) to the outer surface (52) and that ranges from 10 µm to 70 µm.

15. The breathable and waterproof composite fabric in any one of claims 1 to 14, **characterized in that** the fabric sheet (3) is made of one of a woven material and a non-woven material.

## Patentansprüche

1. Atmungsaktiver und wasserfester Verbundstoff, der eine Stoffbahn (3) mit einer ersten Oberfläche (31) und einer zweiten Oberfläche (32) aufweist, die entgegengesetzt zu der ersten Oberfläche (31) angeordnet ist, und mit einer Mehrzahl von Mikroporen (33), die sich durch die erste und zweite Oberfläche (31, 32) erstrecken, und mit einer ersten wasserfesten Kunststofffolie (5) mit einer äußeren Oberfläche (52), einer inneren Oberfläche (51), die entgegengesetzt zu der äußeren Oberfläche (52) angeordnet ist, und einer Mehrzahl erster hohler Vorsprünge (50), wobei der atmungsaktive und wasserfeste Verbundstoff **dadurch gekennzeichnet ist, dass**:
die erste wasserfeste Kunststofffolie (5) aus einem porenfreien Material besteht und mit der ersten Oberfläche (31) der Stoffbahn (3) verbunden ist, wobei die ersten hohlen Vorsprünge (50) der ersten wasserfesten Kunststofffolie (5) von der äußeren Oberfläche (52) vorstehen, wobei jeder ersten hohlen Vorsprünge (50) einen ersten Kanal (501) definiert, der sich durch die innere und äußere Oberfläche (51, 52) erstreckt und ein erstes inneres offenes Ende (502) aufweist, das an der inneren Oberfläche (51) ausgebildet ist, und ein erstes äußeres offenes Ende (503), das distal zu der inneren und äußeren Oberfläche (51, 52) ist, wobei sich der erste Kanal (501) gekrümmt von dem ersten inneren offenen Ende (502) zu dem ersten äußeren offenen Ende (503) erstreckt.

2. Atmungsaktiver und wasserfester Verbundstoff nach Anspruch 1, **dadurch gekennzeichnet, dass** die ersten hohlen Vorsprünge (50) von der äußeren Oberfläche (52) in eine erste Richtung (X) vorstehen, entgegengesetzt zu der Stoffbahn (3), und wobei sie so gekrümmt sind, dass sie sich in eine zweite Richtung (Y) transversal zu der ersten Richtung erstrecken.

3. Atmungsaktiver und wasserfester Verbundstoff nach Anspruch 1 oder 2, ferner **dadurch gekennzeichnet, dass** sich eine adhäsive Musterschicht (40) zwischen der ersten Oberfläche (31) der Stoffbahn (3) und der inneren Oberfläche (51) der ersten wasserfesten Kunststofffolie (5) befindet und diese miteinander verbindet.

4. Atmungsaktiver und wasserfester Verbundstoff nach Anspruch 3, **dadurch gekennzeichnet, dass** die adhäsive Musterschicht (4) eine Mehrzahl von Klebepunkten (41) aufweist.

5. Atmungsaktiver und wasserfester Verbundstoff nach einem der Ansprüche 1 bis 4, **dadurch gekennzeichnet, dass** der erste Kanal (501) jedes der ersten hohlen Vorsprünge (50) eine Trichterform aufweist, die von dem ersten inneren offenen Ende (502) zu dem ersten äußeren offenen Ende (503) verjüngt ist.

6. Atmungsaktiver und wasserfester Verbundstoff nach einem der Ansprüche 1 bis 5, **dadurch gekennzeichnet, dass** jeder der ersten hohlen Vorsprünge (50) ferner eine Ausziehstreifen (504) aufweist, der sich von dem ersten äußeren offenen Ende (503) erstreckt und der so beweglich ist, dass er das erste äußere offene Ende (503) bedeckt oder aufdeckt.

7. Atmungsaktiver und wasserfester Verbundstoff nach einem der Ansprüche 2 bis 6, **dadurch gekennzeichnet, dass** die erste wasserfeste Kunststofffolie ferner eine Mehrzahl zweiter hohler Vorsprünge (70) aufweist, die von der äußeren Oberfläche (52) in die Richtung (X) entgegengesetzt zu der Stoffbahn (3) vorstehen, und die so gekrümmt sind, dass sie sich in eine dritte Richtung (Z) erstrecken, die transversal zu der ersten Richtung (X) ist und sich von der zweiten Richtung (Y) unterscheidet.

8. Atmungsaktiver und wasserfester Verbundstoff nach einem der Ansprüche 1 bis 7, **dadurch gekennzeichnet, dass** der erste Kanal (501) jedes der ersten hohlen Vorsprünge (50) einen Mindestdurchmesser aufweist, der größer ist als 0,2 µm und kleiner als 10 µm.

9. Atmungsaktiver und wasserfester Verbundstoff nach einem der Ansprüche 1 bis 8, **dadurch gekennzeichnet, dass** der erste Kanal (501) jedes der ersten hohlen Vorsprünge (50) einen Mindestdurchmesser aufweist, der größer ist als 0,5 µm und kleiner als 5 µm.

10. Atmungsaktiver und wasserfester Verbundstoff nach einem der Ansprüche 1 bis 9, **dadurch gekennzeichnet, dass** die erste wasserfeste Kunststofffolie (5) aus einem thermoplastischen Material besteht, das ausgewählt ist aus der Gruppe bestehend aus Polyolefinen, Polyestern, thermoplastischen Elastomeren und Kombinationen davon.

11. Atmungsaktiver und wasserfester Verbundstoff nach einem der Ansprüche 2 bis 10, **dadurch gekennzeichnet, dass** die erste wasserfeste Kunststofffolie (3) ferner eine Mehrzahl dritter hohler Vorsprünge (80) aufweist, die von der inneren Oberfläche (51) in eine vierte Richtung (X') vorstehen, die zu der Richtung (X) entgegengesetzt ist, und die so gekrümmt sind, dass sie sich in eine fünfte Richtung (Y') erstrecken, die transversal zu der vierten Richtung (X') ist.

12. Atmungsaktiver und wasserfester Verbundstoff nach einem der Ansprüche 1 bis 11, ferner **gekennzeichnet durch** eine zweite wasserfeste Kunststofffolie (6) aus einem porenfreien Material, mit einer äußeren Oberfläche (62), einer inneren Oberfläche (61), die zu der äußeren Oberfläche (62) der zweiten wasserfesten Kunststofffolie (6) entgegengesetzt ist, und die mit der zweiten Oberfläche (32) der Stoffbahn (3) verbunden ist, und mit einer Mehrzahl vierter hohler Vorsprünge (60), die von der äußeren Oberfläche (62) der zweiten wasserfesten Kunststofffolie (6) vorstehen.

13. Atmungsaktiver und wasserfester Verbundstoff nach Anspruch 12, **dadurch gekennzeichnet, dass** die zweite wasserfeste Kunststofffolie (6) aus einem thermoplastischen Material besteht, das ausgewählt ist aus der Gruppe bestehend aus Polyolefinen, Polyestern und thermoplastischen Elastomeren.

14. Atmungsaktiver und wasserfester Verbundstoff nach einem der Ansprüche 1 bis 13, **dadurch gekennzeichnet, dass** die erste wasserfeste Kunststofffolie (5) eine Dicke aufweist, die von der inneren Oberfläche (51) zu der äußeren Oberfläche (52) gemessen wird, und die im Bereich von 10 µm bis 70 µm liegt.

15. Atmungsaktiver und wasserfester Verbundstoff nach einem der Ansprüche 1 bis 14, **dadurch gekennzeichnet, dass** die Stoffbahn (3) aus einem gewebten Material oder einem Vliesmaterial besteht.

## Revendications

1. Tissu composite respirant et imperméable à l'eau comprenant une feuille de tissu (3) ayant une première surface (31) et une seconde surface (32) qui est opposée à la première surface (31), et une pluralité de micropores (33) s'étendant à travers les première et seconde surfaces (31, 32), et un premier film plastique imperméable à l'eau (5) ayant une surface extérieure (52), une surface intérieure (51) qui est opposée à la surface extérieure (52), et une pluralité de premières saillies creuses (50), le tissu composite respirant et imperméable à l'eau étant **caractérisé par** :
le premier film plastique imperméable à l'eau (5) en un matériau non poreux et collé à ladite première surface (31) de ladite feuille de tissu (3), les premières saillies creuses (50) du premier film plastique imperméable à l'eau (5) faisant saillie de la surface extérieure (52), chacune des premières saillies creuses (50) définissant un premier canal (501) qui s'étend à travers les surfaces intérieure et extérieure (51, 52) et qui a une première extrémité ouverte intérieure (502) formée au niveau de la surface intérieure (51), et une première extrémité ouverte extérieure (503) distale des surfaces intérieure et extérieure (51, 52), ledit premier canal (501) s'étendant de manière incurvée depuis ladite première extrémité ouverte intérieure (502) vers ladite première extrémité ouverte extérieure (503).

2. Tissu composite respirant et imperméable à l'eau selon la revendication 1, **caractérisé en ce que** les premières saillies creuses (50) font saillie de la surface extérieure (52) dans une première direction (X) opposée à la feuille de tissu (3) et sont incurvées dans une deuxième direction (Y) transversale à la première direction.

3. Tissu composite respirant et imperméable à l'eau selon la revendication 1 ou 2, **caractérisé en outre par** une couche à motif adhésive (4) disposée entre la première surface (31) de la feuille de tissu (3) et la surface intérieure (51) du premier film plastique imperméable à l'eau (5) et les reliant.

4. Tissu composite respirant et imperméable à l'eau selon la revendication 3, **caractérisé en ce que** ladite couche à motif adhésive (4) comprend une pluralité de points adhésifs (41).

5. Tissu composite respirant et imperméable à l'eau selon l'une quelconque des revendications 1 à 4, **caractérisé en ce que** ledit premier canal (501) de chacune des premières saillies creuses (50) a une forme d'entonnoir conique depuis ladite première extrémité ouverte intérieure (502) vers ladite première extrémité ouverte extérieure (503).

6. Tissu composite respirant et imperméable à l'eau selon l'une quelconque des revendications 1 à 5, **caractérisé en ce que** chacune des premières saillies creuses (50) comprend en outre une patte d'extension (504) qui s'étend depuis ladite première extrémité extérieure ouverte (503) et qui est mobile pour couvrir ou découvrir ladite première extrémité extérieure ouverte (503).

7. Tissu composite respirant et imperméable à l'eau selon l'une quelconque des revendications 2 à 6, **caractérisé en ce que** le premier film plastique imperméable à l'eau a en outre une pluralité de deuxièmes saillies creuses (70) qui font saillie de la surface extérieure (52) dans la première direction (X) opposée à la feuille de tissu (3) et qui sont incurvées pour s'étendre dans une troisième direction (Z) transversale à la première direction (x) et différente de la deuxième direction (Y).

8. Tissu composite respirant et imperméable à l'eau selon l'une quelconque des revendications 1 à 7, **caractérisé en ce que** ledit premier canal (501) de chacune des premières saillies creuses (50) a un diamètre minimal supérieur à 0,2 µm et inférieur à 10 µm.

9. Tissu composite respirant et imperméable à l'eau selon l'une quelconque des revendications 1 à 8, **caractérisé en ce que** ledit premier canal (501) de chacune des premières saillies creuses (50) a un diamètre minimal supérieur à 0,5 µm et inférieur à 5 µm.

10. Tissu composite respirant et imperméable à l'eau selon l'une quelconque des revendications 1 à 9, **caractérisé en ce que** le premier film plastique imperméable (5) est en une matière thermoplastique choisie dans le groupe constitué par les polyoléfines, les polyesters, les élastomères thermoplastiques et leurs combinaisons.

11. Tissu composite respirant et imperméable à l'eau selon l'une quelconque des revendications 2 à 10, **caractérisé en ce que** le premier film plastique imperméable à l'eau (3) comprend en outre une pluralité de troisièmes saillies creuses (80) qui font saillie de la surface intérieure (51) dans une quatrième direction (X') opposée à la première direction (X), et qui sont incurvées pour s'étendre dans une cinquième direction (Y') transversale à la quatrième direction (X') .

12. Tissu composite respirant et imperméable à l'eau selon l'une quelconque des revendications 1 à 11, **caractérisé en outre par** un second film plastique imperméable à l'eau (6) en un matériau non poreux, comprenant une surface extérieure (62), une surface intérieure (61) qui est opposée à ladite surface extérieure (62) dudit second film plastique imperméable à l'eau (6) et qui est liée à la seconde surface (32) du tissu (3) et une pluralité de quatrièmes saillies creuses (60) faisant saillie de ladite surface extérieure (62) dudit second film plastique imperméable à l'eau (6).

13. Tissu composite respirant et imperméable à l'eau selon la revendication 12, **caractérisé en ce que** ledit second film plastique imperméable à l'eau (6) est en une matière thermoplastique choisie dans le groupe constitué par les polyoléfines, les polyesters et les élastomères thermoplastiques.

14. Tissu composite respirant et imperméable à l'eau selon l'une quelconque des revendications 1 à 13, **caractérisé en ce que** le premier film plastique imperméable (5) a une épaisseur qui est mesurée de la surface intérieure (51) à la surface extérieure (52) et qui varie de 10 µm à 70 µm.

15. Tissu composite respirant et imperméable à l'eau selon l'une quelconque des revendications 1 à 14, **caractérisé en ce que** la feuille de tissu (3) est en un matériau tissé et un matériau non tissé.
